# FASCICULE DE BREVET EUROPEEN

(11) **EP 4 338 639 B1**
(45) Date de publication et mention de la délivrance du brevet: **04.06.2025**
(21) Numéro de dépôt: 22196175.8
(22) Date de dépôt: 16.09.2022
(51) Int. Cl.: A44C 27/00, B44C 1/22, B44C 3/02, G04B 19/12, G04D 3/00

(54) **PROCEDE DE FABRICATION D'UN COMPOSANT D HABILLAGE COMPORTANT UN RESEAU DE DIFFRACTION**
VERFAHREN ZUR HERSTELLUNG EINER VERKLEIDUNGSKOMPONENTE MIT EINEM BEUGUNGSGITTER
METHOD FOR PRODUCING A CLADDING COMPONENT COMPRISING A DIFFRACTION GRATING

(43) Date de publication de la demande: 20.03.2024
(73) Titulaire: Comadur SA, 2400 Le Locle (CH)
(72) Inventeur: VUILLE, Pierry, 2338 Les Emibois (CH); GIRY, Benoit, 25130 Villers-Le-Lac (CH); RITTINER, Gabriel, 2400 Le Locle (CH); COMBOTTE, Bastien, 25570 Grand Combe Chateleu (FR)
(74) Mandataire: ICB SA

(56) Documents cités:
- EP-B1- 2 237 697
- CH-A2- 715 906
- CH-B1- 710 494
- US-A- 4 604 329
- US-A1- 2002 068 148

## Description

### Domaine technique de l'invention

L'invention relève du domaine de l'horlogerie, des articles de modes, de la bijouterie ou de la joaillerie, et concerne plus particulièrement un procédé de fabrication d'un composant d'habillage d'une montre, d'un article de mode, de bijouterie ou de joaillerie, ledit composant comportant un réseau de diffraction.

Dans le présent texte, la notion « d'article de mode » comprend les articles ou accessoires d'habillement, tels que les ceintures, chaussures, vêtements, etc., et comprend en outre les articles de lunetterie, les articles de téléphonie, ou tout autre objet décoratif.

### Arrière-plan technologique

Dans le domaine de l'horlogerie en particulier, les composants d'habillage pour montres, notamment le cadran, le rehaut, la lunette, etc., peuvent présenter, à des fins décoratives, des décors réalisés à partir de couches minces déposées à la surface d'un substrat. En particulier, ces couches minces permettent de colorer le composant d'habillage, par exemple pour imprimer des motifs sur sa surface.

La surface d'un composant d'habillage peut également être structurée, par exemple par usinage, afin de présenter un certain relief.

Des décors sur des pièces d'habillage peuvent également être réalisées de sorte à de générer des phénomènes de diffraction de la lumière et ainsi présenter une couleur pouvant varier selon l'orientation de la direction d'observation d'un utilisateur et/ou l'orientation d'une source de lumière. Ces phénomènes sont générés par l'intermédiaire de réseaux de diffraction réalisés sur le composant d'habillage, tel que décrit dans le document CH715906. Ce type de décor est attractif dans la mesure où il est évolutif et peut être très varié.

Toutefois, la réalisation de ce type de décor impose plusieurs contraintes notamment une exigence élevée en terme de maitrise des tolérances de fabrication et d'état de surface. Par ailleurs, ce type de décor est uniquement réalisé sur des matériaux métalliques. Il existe donc un besoin de pouvoir réaliser des décors avec des réseaux de diffraction de façon répétable, en garantissant le respect des exigences de fabrication, tout en diversifiant la nature du ou des matériaux constitutifs du composant d'habillage.

Le document EP 2237697 B1 décrit le préambule de la revendication 1.

### Résumé de l'invention

L'invention concerne, à cet effet, un procédé de fabrication d'un composant d'habillage d'une montre, d'un article de mode ou d'un article de bijouterie ou de joaillerie, comprenant les étapes suivantes :
- dépôt d'une couche de base opaque sur tout ou partie de la surface d'une face interne d'un substrat réalisé dans un matériau transparent,
- ablation localisée de la couche de base par usinage laser, de sorte à former au moins une poche dont le fond est formé par le substrat et présente un réseau de diffraction.

La réalisation de l'étape d'ablation sur la couche de base plutôt que sur le substrat permet avantageusement de pouvoir réaliser le réseau de diffraction avec un niveau d'énergie fortement diminué, du fait de la différence entre leurs seuils d'ablation.

En plus d'autoriser le choix de tout matériau transparent pour constituer le substrat, notamment un matériau transparent présentant un seuil d'ablation très élevé tel que du saphir ou du verre, le procédé selon l'invention permet de garantir une excellente répétabilité et une maitrise des tolérances de fabrication du fait des faibles niveaux d'énergie mis en jeu.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, plusieurs étapes d'ablation localisée sont réalisées de sorte à réaliser une pluralité de réseaux de diffraction.

Dans des modes particuliers de mise en œuvre, le procédé comprend une étape de polissage réalisée avant l'étape de dépôt de la couche de base, dans laquelle la face interne du substrat est polie.

Dans des modes particuliers de mise en œuvre, le procédé comprend une étape de gravure dans laquelle tout ou partie de la couche de base est éliminée sur la totalité de son épaisseur sans que la face interne du substrat ne soit impactée.

Dans des modes particuliers de mise en œuvre, le procédé comprend une étape de dépôt d'une couche secondaire dans laquelle une couche secondaire opaque est déposée au moins sur le réseau de diffraction.

Dans des modes particuliers de mise en œuvre, lors de l'étape de gravure, une partie de la couche secondaire est éliminée de sorte à conformer ladite couche selon une forme prédéfinie, sans que la face interne du substrat ne soit impactée.

Dans des modes particuliers de mise en œuvre, un revêtement antireflet est déposé sur une face externe du substrat opposée à la face interne.

Selon un autre objet, la présente invention concerne un cadran de montre formé par la mise en œuvre du procédé tel que précédemment décrit.

Selon encore un autre objet, l'invention concerne un article de mode comportant un composant d'habillage formé par la mise en œuvre du procédé tel que décrit précédemment.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente schématiquement en vue en coupe, un composant d'habillage en cours de réalisation par la mise en œuvre d'une étape d'un procédé de fabrication selon l'invention,
- les figures 2 à 5 représentent schématiquement en vue en coupe, un composant d'habillage obtenu par la mise en œuvre du procédé de fabrication selon l'invention dans différents exemples de mise en œuvre.

On note que les figures ne sont pas à l'échelle.

### Description détaillée de l'invention

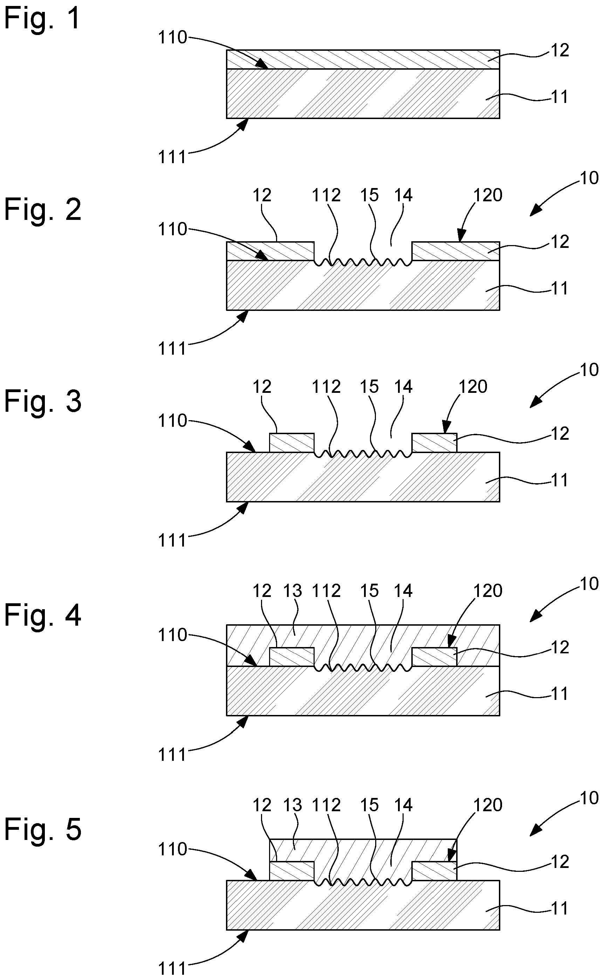

La présente invention concerne un procédé de fabrication d'un composant d'habillage 10 tel que représenté sur les figures 2 à 5 dans différents exemples de mise en œuvre dudit procédé.

Le composant d'habillage 10 peut avantageusement constituer un composant d'habillage d'une montre, tel qu'un cadran, un composant d'habillage d'un article de mode, ou d'un article de bijouterie ou de joaillerie.

Les termes « articles de mode » définissent dans le présent texte tout article ou accessoire d'habillement, tels qu'une ceinture, une chaussure, un vêtement, etc., et comprend en outre les articles de lunetterie, les articles de téléphonie, tels que les coques de téléphones, ou tout objet décoratif.

Le procédé de fabrication comprend une première étape de dépôt d'une couche mince, dite « couche de base » 12, opaque, sur toute ou partie de la surface d'une face interne 110 d'un substrat 11 réalisé dans un matériau transparent, tel que représenté sur la figure 1. Il y a lieu de noter que le terme « transparent » désigne dans le présent texte une capacité d'un matériau à laisser passer tout ou partie d'un rayonnement lumineux, notamment de la lumière visible à l'œil nu. Un tel matériau transparent peut être du saphir, du verre, etc.

Le dépôt de la couche de base 12 peut être réalisé par une méthode de dépôt physique par phase vapeur, de dépôt chimique par phase vapeur, ou par toute autre méthode appropriée à la portée de l'homme du métier. A titre d'exemple, la couche de base 12 peut être réalisée en matériau métallique, notamment en Cr, Au, Ti, Zr, en matériau diélectrique, seuls ou en alliage, en oxyde et/ou nitrure, par exemple en CrTiO2.

La face interne 110 du substrat 11 est opposée à une face externe 111 destinée à être orientée vers un environnement extérieur, la face interne 110 étant destinée à être orientée vers un environnement intérieur, par exemple en regard d'un mouvement horloger, dans le cas dans lequel le composant d'habillage 10 est un composant d'une montre.

Préférentiellement, la face interne 110 est polie lors d'une étape préliminaire de polissage, préalablement au dépôt de la couche de base 12.

Le procédé comporte, suite à l'étape de dépôt de la couche de base 12, une étape d'ablation localisée de la couche de base 12 par usinage laser, de sorte à former, dans l'épaisseur de la couche de base 12, une ou des poches 14 dont le fond présente un réseau de diffraction 15, tel que représenté par la figure 2. La poche 14 s'étend entre une face externe 120 de la couche de base 12 et le fond, selon une direction matérialisant l'épaisseur de la couche de base 12.

Dans la présente description de l'invention et en concordance avec les figures, il est fait référence ci-dessous à une seule poche 14 et par conséquent à un unique réseau de diffraction 15 pour faciliter la lecture du texte.

Un tel réseau de diffraction 15 est formé par la répétition périodique d'un motif diffractant.

Par exemple, le réseau de diffraction est formé par une pluralité de stries parallèles espacées les unes des autres par un pas régulier, par exemple de quelques micromètres, typiquement entre 2 et 20 µm.

A titre d'exemple, le laser utilisé pour l'usinage laser peut être un laser femtosecondes, présentant une énergie d'impulsion de quelques micro joules, par exemple comprise entre 1 et 5 µJ, et une fréquence de répétition de plusieurs centaines de kilohertz, par exemple entre 300 et 500 kHz.

Dans l'exemple de réalisation représenté sur les figures 2 à 5, la poche 14 débouche sur la face interne 110 du substrat 11, le réseau de diffraction 15 étant formé sur ladite face interne 110. Dans d'autres exemples de réalisation non couverts par l'invention, notamment en fonction de paramètres de l'usinage laser, tels que la puissance ou l'énergie du laser, la position du point focal, etc., et/ou en fonction du matériau constituant la couche de base 12, le réseau de diffraction 15 peut être formé par un mélange des matériaux de la couche de base 12 et dudit substrat 11.

Avantageusement, afin d'enrichir le décor, le procédé selon l'invention peut comporter plusieurs étapes d'ablation localisée de sorte à générer une pluralité de réseaux de diffraction 15 de sorte à représenter un motif particulier. Ces réseaux de diffraction 15 peuvent être formés de sorte à être différents les uns des autres, par exemple, l'orientation de leurs stries respectives, le nombre et les dimensions de leurs stries ou leurs pas de séparation peuvent être différents. En outre, les réseaux de diffraction 15 peuvent être générés sur des portions de la face interne 110 du substrat 11 inclinées les unes par rapport aux autres.

En résumé, les étapes d'ablation peuvent être réalisées avec des paramètres différents suivant l'aspect désiré des réseaux de diffraction 15 à réaliser, la détermination des valeurs de ces paramètres étant à la portée de l'homme du métier.

L'ablation localisée générant la poche 14 et le réseau de diffraction 15 simultanément, le réseau de diffraction 15 coïncide parfaitement avec la poche 14 avec laquelle il est générée. Le respect des tolérances d'alignement entre la face externe 120 de la couche de base 12 et le réseau de diffraction 15 est donc garanti.

Avantageusement, le procédé peut comprendre une étape de gravure dans laquelle une partie de la couche de base 12 est éliminée sur la totalité de son épaisseur de sorte à conformer ladite couche de base 12 selon une forme prédéfinie, sans que la face interne 110 du substrat 11 ne soit impactée, tel que le représente la figure 3. Cette caractéristique participe à enrichir les décors pouvant être réalisés sur le composant d'habillage 10. Une telle étape de gravure peut être mise en œuvre par photolithographie, usinage laser, etc.

Alternativement, lors de l'étape de gravure, la totalité de la couche de base 12 peut être éliminée sur l'ensemble de son épaisseur.

Dans les exemples de réalisation décrits ci-dessus et représentés sur les figures 2 et 3, l'utilisateur est destiné à voir le décor du composant d'habillage 10 depuis la face externe 111, à travers ledit substrat 11, ou depuis la face interne 110 selon l'agencement dudit composant d'habillage 10 au sein de la montre, du bijou ou de l'article de mode.

Lorsque l'utilisateur est destiné à voir le décor du composant d'habillage 10 depuis la face externe 111, à travers ledit substrat 11, ce dernier a avantageusement pour effet de protéger la couche de base 12 de potentielles agressions du milieu extérieur.

Dans un exemple de mise en œuvre de l'invention, le procédé peut comprendre une étape de dépôt d'une couche secondaire 13, dans laquelle une couche secondaire 13 opaque est déposée sur le réseau de diffraction 15 et sur la couche de base 12, si cette dernière n'est pas complètement éliminée lors d'une étape de gravure ou lorsqu'aucune étape de gravure n'a été mise en œuvre. Si une étape de gravure a été mise en œuvre et que l'ensemble de la couche de base 12 a été éliminée, la couche secondaire 13 est également déposée contre la face interne 110 du substrat 11, comme représenté sur la figure 4.

Dans cet exemple de réalisation représenté sur les figures 4 et 5, l'utilisateur est destiné à voir le décor du composant d'habillage 10 uniquement depuis la face externe 111 à travers ledit substrat 11.

La couche secondaire 13 permet avantageusement d'augmenter la réflexion des rayons lumineux diffractés, et ainsi d'augmenter la vivacité et le contraste du décor généré. A cet effet, la couche peut être réalisée en matériau métallique, céramique, en oxyde et/ou en nitrure.

Dans l'exemple de mise en œuvre représenté sur la figure 5, l'étape de gravure peut consister à éliminer concomitamment une partie de la couche de base 12 et une partie de la couche secondaire 13, de sorte à conformer lesdites couches selon une forme prédéfinie, sans que la face interne 110 du substrat 11 ne soit impactée. La partie éliminée de la couche secondaire 13 est superposée à celle de la couche de base 12.

Avantageusement, un revêtement antireflet (non représenté sur les figures) peut être déposé sur la face externe 111 du substrat 11. Un tel revêtement antireflet permet de favoriser la transmission des rayons lumineux incidents et de minimiser, voire de supprimer, les reflets du rayonnement lumineux incident sur la face externe 111 du substrat 11. Ainsi, cette caractéristique permet d'intensifier l'aspect du phénomène de diffraction.

Un revêtement antireflet peut également être déposé sur la couche de base 12 ou sur la couche secondaire 13 suivant l'exemple de mise en œuvre de l'invention considéré, et éventuellement sur la face interne 110 du substrat 11 si une étape de gravure a été réalisée.

On note que, grâce aux caractéristiques de l'invention, l'aspect visuel du décor du composant d'habillage 10 peut être particulièrement riche et attractif dans la mesure où en plus des couleurs envisageables de la couche de base 12 et éventuellement de la couche secondaire 13, s'ajoute l'aspect du réseau de diffraction 15. Par ailleurs, le procédé selon l'invention permet de générer un effet visuel de profondeur entre les couches de base 12 et secondaire 13 et le réseau de diffraction 15.

Par ailleurs, la couche de base 12 permet avantageusement de pouvoir réaliser, sur un substrat 11 transparent, un décor avec un réseau de diffraction 15 par un usinage laser nécessitant une faible puissance, ce qui permet de garantir une meilleure maitrise de la répétabilité de l'usinage, et par conséquent, d'assurer un respect constant des tolérances de fabrication. Par ailleurs, la réalisation d'un usinage nécessitant une puissance élevée provoquerait une altération de l'état de surface de la face interne 110 du substrat 11 conduisant à une matification de sa surface, en plus des incertitudes générées quant au respect des exigences dimensionnelles du composant d'habillage 10.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, la couche de base 12 et/ou la couche secondaire 13 peuvent être constituées par un empilement de couches minces, de façon connue en soi par l'homme du métier.

## Revendications

1. Procédé de fabrication d'un composant d'habillage (10) d'une montre, d'un article de mode ou d'un article de bijouterie ou de joaillerie, **caractérisé en ce qu'**il comprend les étapes suivantes :
- dépôt d'une couche de base (12) opaque sur tout ou partie de la surface d'une face interne (110) d'un substrat (11) réalisé dans un matériau transparent,
- ablation localisée de la couche de base (12) par usinage laser, de sorte à former au moins une poche (14) **caractérisé en ce que** le fond de la poche (14) est formé par le substrat (11) et présente un réseau de diffraction (15).

2. Procédé selon la revendication 1, dans lequel plusieurs étapes d'ablation localisée sont réalisées de sorte à réaliser une pluralité de réseaux de diffraction (15).

3. Procédé selon les revendications 1 ou 2, comprenant une étape de polissage réalisée avant l'étape de dépôt de la couche de base (12), dans laquelle la face interne (110) du substrat (11) est polie.

4. Procédé selon l'une des revendications 1 à 3, comprenant une étape de gravure dans laquelle tout ou partie de la couche de base (12) est éliminée sur la totalité de son épaisseur sans que la face interne (110) du substrat (11) ne soit impactée.

5. Procédé selon l'une des revendications 1 à 3, comprenant une étape de dépôt d'une couche secondaire (13) dans laquelle une couche secondaire (13) opaque est déposée au moins sur le réseau de diffraction (15).

6. Procédé selon les revendications 4 et 5, dans lequel, lors de l'étape de gravure, une partie de la couche secondaire (13) est éliminée de sorte à conformer ladite couche selon une forme prédéfinie, sans que la face interne (110) du substrat (11) ne soit impactée.

7. Procédé de fabrication selon l'une des revendication 1 à 6, dans lequel un revêtement antireflet est déposé sur une face externe (111) du substrat (11) opposée à la face interne (110).

8. Cadran de montre **caractérisé en ce qu'**il est formé par la mise en œuvre du procédé selon l'une des revendications 1 à 7.

9. Article de mode **caractérisé en ce qu'**il comporte un composant d'habillage (10) formé par la mise en œuvre du procédé selon l'une des revendications 1 à 7.

## Patentansprüche

1. Verfahren zur Herstellung einer Verkleidungskomponente (10) einer Uhr, eines Modeartikels oder eines Schmuck- oder Juwelierartikels, **dadurch gekennzeichnet, dass** es die folgenden Schritte umfasst:
- Aufbringen einer undurchsichtigen Grundschicht (12) auf die gesamte Oberfläche einer Innenseite (110) eines Substrats (11) oder eines Teils davon, das aus einem transparenten Werkstoff realisiert ist,
- örtlich begrenztes Abtragen der Grundschicht (12) durch Laserbearbeitung, um mindestens eine Tasche (14) zu bilden, **dadurch gekennzeichnet, dass** der Boden durch das Substrat (11) gebildet wird, und ein Beugungsgitter (15) aufweist.

2. Verfahren nach Anspruch 1, wobei mehrere örtlich begrenzte Abtragschritte durchgeführt werden, um eine Vielzahl von Beugungsgittern (15) durzuführen.

3. Verfahren nach den Ansprüchen 1 oder 2, das einen Polierschritt umfasst, der vor dem Schritt des Aufbringens der Grundschicht (12) durchgeführt wird, wobei die Innenseite (110) des Substrats (11) poliert wird.

4. Verfahren nach einem der Ansprüche 1 bis 3, das einen Gravurschritt umfasst, wobei die gesamte Grundschicht (12) oder ein Teil davon über die Gesamtheit ihrer Dicke entfernt wird, ohne dass die Innenseite (110) des Substrats (11) in Mitleidenschaft gezogen wird.

5. Verfahren nach einem der Ansprüche 1 bis 3, das einen Schritt zum Aufbringen einer Sekundärschicht (13) umfasst, wobei eine undurchsichtige Sekundärschicht (13) zumindest auf dem Beugungsgitter (15) aufgebracht wird.

6. Verfahren nach den Ansprüchen 4 und 5, wobei beim Gravurschritt ein Teil der Sekundärschicht (13) entfernt wird, um die Schicht gemäß einer vorab definierten Form anzupassen, ohne dass die Innenseite (110) des Substrats (11) in Mitleidenschaft gezogen wird.

7. Verfahren zur Herstellung nach einem der Ansprüche 1 bis 6, wobei eine Antireflexionsbeschichtung auf einer Außenseite (111) des der Innenseite (110) gegenüberliegenden Substrats (11) aufgebracht wird.

8. Zifferblatt einer Uhr, **dadurch gekennzeichnet, dass** es durch die Umsetzung des Verfahrens nach einem der Ansprüche 1 bis 7 gebildet wird.

9. Modeartikel, **dadurch gekennzeichnet, dass** er eine Verkleidungskomponente (10) umfasst, die durch die Umsetzung des Verfahrens nach einem der Ansprüche 1 bis 7 gebildet wird.

## Claims

1. Method for manufacturing an external component (10) of a watch, of a fashion item or of a jewellery item, **characterised in that** it comprises the following steps of:
- depositing an opaque base layer (12) on all or part of the surface of an inner face (110) of a substrate (11) made of a transparent material,
- localised ablation of the base layer (12) by laser machining, so as to form at least one pocket (14) **characterised in that** the bottom of the pocket (14) is formed by the substrate (11) and has a diffraction grating (15).

2. Method according to claim 1, wherein a plurality of localised ablation steps are performed so as to produce a plurality of diffraction gratings (15).

3. Method according to claims 1 or 2, comprising a polishing step performed before the step of depositing the base layer (12), wherein the inner face (110) of the substrate (11) is polished.

4. Method according to one of claims 1 to 3, comprising an engraving step wherein all or part of the base layer (12) is eliminated over its entire thickness without the inner face (110) of the substrate (11) being impacted.

5. Method according to one of claims 1 to 3, comprising a step of depositing a secondary layer (13) wherein an opaque secondary layer (13) is deposited at least on the diffraction grating (15).

6. Method according to claims 4 and 5, wherein, during the engraving step, a part of the secondary layer (13) is eliminated so as to shape said layer according to a predefined shape, without the inner face (110) of the substrate (11) being impacted.

7. Manufacturing method according to one of claims 1 to 6, wherein an anti-reflection coating is deposited on an outer face (111) of the substrate (11) opposite the inner face (110).

8. Watch dial **characterised in that** it is formed by implementing the method according to one of claims 1 to 7.

9. Fashion item **characterised in that** it includes an external component (10) formed by implementing the method according to one of claims 1 to 7.
